Europäisches Patentamt

European Patent Office

Office européen des brevets

(19)

(11) Numéro de publication: **0 189 697**
**A1**

(12) # DEMANDE DE BREVET EUROPEEN

(21) Numéro de dépôt: **85402534.3**

(22) Date de dépôt: **18.12.85**

(51) Int. Cl.⁴: **B 23 B 31/26**
**B 23 Q 3/12, B 23 B 29/034**
**B 23 B 31/16, B 23 B 31/04**

(30) Priorité: **21.01.85 FR 8500787**

(43) Date de publication de la demande:
**06.08.86 Bulletin 86/32**

(84) Etats contractants désignés:
**DE GB IT SE**

(71) Demandeur: **SANDVIK TOBLER S.A.**
**4, Avenue de la Vieille France**
**F-95380 Louvres(FR)**

(72) Inventeur: **Barbieux, Jacques**
**20, Avenue Beauséjour**
**F-95380 Louvres(FR)**

(74) Mandataire: **Morash, Daniel**
**17, Avenue La Bruyère**
**F-78160 Marly-le-Roi(FR)**

(54) **Système d'accrochage rapide.**

(57) Accouplement ou dispositif d'accrochage rapide entre un organe d'une machine-outil (MA) et un système de maintien tel qu'un porte-outil (P) ou d'un dispositif de serrage tel qu'un mandrin (M), remarquable en ce qu'il comporte au moins un système de verrouillage irréversible et, éventuellement, un système de rattrapage de jeu, à verrouillage irréversible, ce rattrapage de jeu pouvant se produire lors de l'échange d'un desdits ssytèmes pour un autre système, l'irréversibilité du verrouillage étant réalisée par des moyens comprenant des surfaces de contact (106₁ et 107₂) qui, en position de blocage, coopèrent en position de verrouillage et de déverrouillage avec des surfaces de contact correspondantes des organes commandant le verrouillage et le déverrouillage, avec chaque gènératrice desdites surfaces de contact étant inclinée d'un angle allant de 3° à 14° par rapport à une ligne parallèle à l'axe longitudinal ou à une ligne perpendiculaire à l'axe longitudinal de l'accouplement, la valeur de cet angle (3° à 14°) définissant l'augmentation considérable de l'effort de verrouillage et assurant son irréversibilité. Une arrivée d'air peut être prévue pour nettoyage lors du désaccouplement de l'outil ou du mandrin de la machine.

./...

EP 0 189 697 A1

POSITION VÉRROUILLÉE

MA

POSITION DÉVERROUILLÉE

FIG.1

**0189697**

# ACCOUPLEMENT OU DISPOSITIF D'ACCROCHAGE RAPIDE POUR PORTE-OUTIL et DISPOSITIF de SERRAGE

La présente invention concerne des accouplements ou des dispositifs d'accrochage entre un organe d'une machine-outil et un système de maintien tel qu'un porte-outil ou d'un dispositif de serrage tel qu'un mandrin, ainsi que des dispositifs d'accrochage rapide dudit système de maintien à l'organe d'une machine-outil, des moyens de verrouillage de la partie amovible dudit accouplement ou dispositif et/ou de la partie amovible de la commande de l'outil ou du dispositif de serrage étant prévus.

On connaît des accouplements entre un organe d'une machine outil et un système de maintien comprenant, par exemple, deux couronnes cran- tées à denture radiale, une couronne étant montée sur l'organe de la machine outil et l'autre sur le système amovible de maintien; ou encore l'accouplement peut comprendre, par exemple, une projection conique de l'organe de la machine-outil, qui coopère avec un alésage conique du système amovible de maintien; ou encore l'accouplement peut être réalisé sous forme d'une projection crantée sur l'organe de la machine-outil qui coopère avec un alésage cranté sur le système amovible de maintien; ces modes de réalisation cités, à titre d'exemples, pouvant, en outre, comprendre des moyens d'accrochage et de décrochage rapides d'un outil ou d'un dispositif de serrage tels que, par exemple, décrits dans la demande de brevet N° 83 07093 au nom de la demanderesse.

Les accouplements connus ne comportent pas un système d'accro- chage entre l'organe de la machine-outil et le système de maintien. En outre, les moyens d'accrochage connus entre les parties amovibles, tels qu'outils ou dispositifs de serrage et l'organe de la machine-outil n'assurant pas une sécurité suffisante de maintien desdites parties amovibles, lors du fonctionnement de la machine-outil; or, cette sécurité, qui est souhaitable pour toutes les machines-outils, est indispensable pour des machines-outils automatisées et devant travailler avec une très grande précision, et à une cadence rapide.

La présente invention permet de pallier ces inconvénients en créant des systèmes de verrouillage irréversible, utilisables dans des accouplements ou dispositifs d'accrochage entre un organe d'une machine-outil et un système de maintien, ainsi que de tels accouplements et dispositifs d'accrochage rapide pourvus de tels systèmes de verrouillage.

Conformément à l'invention, l'accouplement ou dispositif

d'accrochage rapide entre un organe d'une machine-outil et un système de maintien tel qu'un porte-outil ou d'un dispositif de serrage tel qu'un mandrin est caractérisé en ce qu'il comporte au moins un système de verrouillage irréversible et, éventuellement, un système de rattrapage des jeux à verrouillage irréversible, ce rattrapage de jeu pouvant se produire lors de l'échange d'un desdits systèmes pour un autre système, l'irréversibilité du verrouillage étant réalisée par des moyens comprenant des surfaces de contact qui, en position de blocage, coopèrent en position de verrouillage et de déverrouillage avec des surfaces de contact correspondantes des organes commandant le verrouillage et le déverrouillage, avec chaque génératrice desdites surfaces de contact étant inclinée d'un angle allant de 3° à 14° par rapport à une ligne parallèle à l'axe longitudinal ou à une ligne perpendiculaire à l'axe longitudinal de l'accouplement, ledit angle a une valeur entre 3° et 10°, et de préférence ledit angle a une valeur entre 3° et 8°, et de préférence entre 4° et 8°.

Lesdits moyens de verrouillage sont réalisés sous forme d'au moins un coulisseau qui, en position de verrouillage, se loge dans au moins un évidement ou dans une gorge pratiquée dans lesdits organes commandant le verrouillage et le déverrouillage, ledit évidement ou gorge pouvant être biseauté pour faciliter l'entrée et la sortie dudit coulisseau.

Des moyens sont prévus pour limiter le déplacement desdits moyens de verrouillage ou de rattrapage de jeu, lors des opérations de verrouillage et de déverrouillage, lesdits moyens comprenant un téton dont une extrémité est montée fixe dans un organe indépendant desdits organes de commande de verrouillage et de déverrouillage tels qu'un organe de la machine outil et dont l'autre extrémité fait saillie dans un évidement permettant la retenue desdits moyens de verrouillage ou de rattrapage de jeu.

Ladite surface inclinée dudit coulisseau coopère en position de déverrouillage avec une surface inclinée dudit évidement ou de ladite gorge pratiqué dans ledit organe de commande, une autre surface inclinée dudit organe de commande ayant une inclinaison identique à celle de la surface dudit coulisseau coopérant avec cette surface inclinée en position de verrouillage.

Ledit coulisseau comporte au moins une partie biseautée à son extrémité opposée à celle qui est en contact avec ledit organe de commande, l'angle d'inclinaison de la partie biseautée étant de 30° à 60° par rapport à l'axe vertical dudit coulisseau passant par lesdites extrémités, ladite partie biseautée étant en contact, en position de verrouillage, avec une face correspondante d'un organe indépendant dudit organe de commande.

Selon un premier mode de réalisation, le dispositif d'accrochage est remarquable en ce que ledit organe de commande est réalisé sous forme d'un piston pouvant être déplacé, dans le sens du déverrouillage, à l'encontre d'un moyen élastique au moyen d'un poussoir par l'intermédiaire d'une goupille pouvant se déplacer parallèlement à l'axe longitudinal de l'accouplement dans une lumière rectangulaire pratiquée dans le corps, ladite goupille étant en contact avec la face antérieure de ladite lumière en position de déverrouillage, des coulisseaux étant alors logés dans des évidements ou une gorge dudit piston.

Selon un autre mode de réalisation , un dispositif d'accrochage rapide pouvant être monté dans une broche machine est caractérisé en ce que le système de verrouillage irréversible comprend un organe de commande réalisé sous forme d'un piston ayant la forme générale d'un fourreau qui peut se déplacer dans le sens longitudinal, lors du déverrouillage à l'encontre d'un moyen élastique, et qui comporte des premiers évidements ou une gorge pour y loger, en position de déverrouillage, au moins un coulisseau et une partie conique dont l'inclinaison va de l'avant vers l'arrière, l'angle d'inclinaison étant entre 3° et 8°, ladite partie conique coopérant avec une clavette de rattrapage d'un jeu axial pouvant se produire entre la face arrière de la tête du tirant amovible qui est relié fixe à la tige de commande du mouvement d'un outil et la face avant d'un embout, qui est en liaison avec une tige de commande reliée à la machine-outil, lors d'un changement de l'outil ou analogue; ladite face supérieure de ladite clavette étant inclinée d'un angle entre 3° et 8° destinée à coopérer avec ladite partie conique dudit piston, et la face avant de ladite clavette étant inclinée d'un angle de 3° à 8° pour coopérer avec une face avant inclinée d'une lumière dans l'embout, de façon à ce que, en position de verrouillage la face avant de la tête est appliquée sans jeu contre la face arrière de la tête de la tige amovible, assurant ainsi une double sécurité de verrouillage par ladite clavette.

Selon un autre mode de réalisation, l'accouplement peut comprendre un premier système de verrouillage d'un porte-outil commandé par un premier piston réalisé sous forme d'un fourreau dont les évidements ou une gorge logent en position de déverrouillage des premiers coulisseaux et dont une face conique coopère avec une face inclinée des coulisseaux en position de verrouillage; et en ce qu'il comprend un deuxième système de verrouillage de la tête de la tige commandant le réglage de l'outil, ledit système comprenant un deuxième piston de commande réalisé sous forme d'un fourreau dont les évidements ou une gorge logent en position de déverrouillage des deuxièmes coulisseaux et dont une face conique coopère avec une face inclinée desdits coulisseaux en position de verrouillage et de réglage de la position de l'outil, ledit deuxième système étant disposé coaxialement dans ledit premier système; un système élastique étant prévu pour faciliter le déplacement de ladite tête et de la tige de commande de réglage de l'outil faisant partie dudit deuxième système vers sa position rétractée, ainsi que pour assurer le rattrapage d'un jeu axial ayant pu se produire, éventuellement, lors de l'échange d'un porte-outil pour un autre, entre la face arrière de la tête de la tige de réglage de l'outil et une butée reliée fixe à ladite tige de réglage de l'outil.

Selon encore un autre mode de réalisation, un dispositif d'accrochage rapide peut comprendre un système de verrouillage dans lequel le piston est pourvu d'évidements ou d'une gorge pour y loger, en position de déverrouillage, des coulisseaux, ledit piston étant pourvu dans sa partie active, dont le diamètre peut être supérieur à celui de ses autres parties, d'une lumière verticale dont la largeur est constante sur toute sa hauteur tandis que sa longueur varie de façon à ce que sa face avant soit réalisée sous forme de deux plans inclinés, l'angle entre ces deux plans inclinés étant entre 90° et 160°; deux glissières étant disposées dans la partie supérieure et la partie inférieure de ladite lumière et dans des lumières supérieure et inférieure du corps de façon à pouvoir se déplacer vers le haut et le bas desdites lumières respectivement, en position de déverrouillage, le long des vis de manoeuvre à deux pas inversés jusqu'à des bagues d'étanchéité disposées dans des évidements desdites glissières, des moyens étant prévus pour modifier la position verticale desdites glissières dans lesdits évidements du corps, afin de permettre un rattrapage d'un jeu éventuel provoqué, lors de l'échange d'un porte-outil contre un autre porte-outil.

Selon encore un autre mode de réalisation, pouvant plus particulièrement être utilisé pour l'accouplement d'un système de serrage tel qu'un mandrin à un organe d'une machine-outil, dans le système de verrouillage, le piston est réalisé sous forme d'un fourreau qui est pourvu sur sa face extérieure de premiers évidements ou d'une première gorge pour y loger, en position de déverrouillage, des premiers moyens servant pour le verrouillage irréversible d'un mandrin, lors de son accouplement sur un organe de la machine-outil, ledit verrouillage irréversible étant obtenu grâce à une partie conique située en amont desdits premiers évidements ou de ladite première gorge ; la face intérieure dudit piston - fourreau étant pourvue de deuxièmes

évidements ou d'une deuxième gorge pour y loger des deuxièmes moyens servant pour le verrouillage des moyens de commande de serrage et de desserrage dudit mandrin; le déverrouillage du porte-mandrin et du mandrin quasi simultané par lesdits moyens de serrage et de desserrage étant effectué par le déplacement avant dans le sens longitudinal dudit piston. Par exemple, lesdits premiers moyens sont réalisés sous forme de coulisseaux dont la face inférieure est inclinée pour coopérer, en position de verrouillage, avec ladite partie conique de la face extérieure dudit piston fourreau ; et en ce que lesdits deuxièmes moyens sont réalisés sous forme de coulisseaux dont aussi bien la face supérieure que la face inférieure sont parallèles à des plans cylindriques dont l'axe est l'axe longitudinal x-x du dispositif pour pouvoir se loger, lors du déverrouillage dans lesdits deuxièmes évidements ou ladite deuxième gorge, de façon à pouvoir être, sur toute leurs longueurs, en contact avec ceux-ci ou celle-ci. Ou encore lesdits premiers moyens sont réalisés sous forme de coulisseaux dont les faces inférieures sont inclinées pour coopérer, en position de verrouillage, avec ladite partie conique de la face extérieure dudit piston-fourreau; et en ce que lesdits deuxièmes moyens sont réalisés sous forme de mors pouvant pivoter vers l'extérieur par l'action d'un moyen élastique pour se mettre en position de déverrouillage de façon à ce que leurs faces supérieures soient alors appliquées contre les faces desdits deuxièmes évidements ou de ladite deuxième gorge, tandis qu'en position de verrouillage, un évidement pratiqué dans la face inférieure de chacun desdits mors emprisonne les têtes des tirettes de commande de serrage d'un mandrin fixe et amovible respectivement, les faces supérieures desdits mors étant maintenues en position de verrouillage à l'encontre dudit moyen élastique, par une face disposée à l'extrémité avant de la partie intérieure dudit piston-fourreau, ladite face étant parallèle à un plan horizontal passant par l'axe longitudinal x - x du dispositif.

Selon encore un autre mode de réalisation, le piston du système de verrouillage est réalisé sous forme d'un fourreau dont la face extérieure, à son extrémité avant, est conique sur une longueur relativement importante, de façon à ce qu'en position de déverrouillage des premiers coulisseaux ayant des faces inférieures inclinées pour pouvoir glisser sur ladite face conique dudit piston fourreau, lors de son déplacement de la position de verrouillage vers la position de déverrouillage, sont disposés sur la partie arrière de ladite partie conique de façon à permettre le dégagement de la partie amovible de l'accouplement; et dont la face inférieure est pourvue

6    0189697

d'évidements ou d'une gorge pour y loger, en position de déverrouillage, des deuxièmes coulisseaux ayant leurs faces supérieure et inférieure parallèles à un plan horizontal passant par l'axe longitudinal de l'accouplement de façon à permettre le dégagement de la tête de la tige de commande de serrage et de desserrage du mandrin.

D'autres caractéristiques et perfectionnements ressortiront du texte suivant donné à titre d'exemple et des figures y afférentes.

Les figures 1, 1a et 1b montrent un premier mode de réalisation d'un accouplement ou dispositif d'accrochage entre un organe d'une machine-outil et un porte-outil, ledit accouplement ou dispositif étant pourvu d'un système de verrouillage irréversible.

Les figures 2, 2a, 2b , 2c et 2d montrent un dispositif d'accrochage rapide pouvant être monté dans une broche machine, ledit dispositif étant pourvu d'un système de verrouillage irréversible d'une tige de commande de positionnement d'un outil et d'un système de rattrapage de jeu axial susdéfini à double sécurité.

Les figures 3, 3a et 3b montrent un deuxième mode de réalisation d'un accouplement ou dispositif d'accrochage entre un organe d'une machine-outil et un porte-outil, ledit accouplement ou dispositif étant pourvu d'un premier système de verrouillage irréversible du porte-outil proprement dit et d'un deuxième système de verrouillage irréversible de la tige de commande de positionnement de l'outil, ainsi que des moyens de rattrapage du jeu axial susdéfini.

Les figures 4, 4a et 4b montrent encore un mode de réalisation d'un dispositif d'accrochage rapide d'un porte-outil sur un organe d'une machine-outil, ledit dispositif étant pourvu d'un système de verrouillage irréversible du porte-outil ainsi que d'un système de rattrapage de jeu axial susmentionné.

Les figures 5 et 5a concernent un mode de réalisation d'un accouplement ou un dispositif d'accrochage entre un organe d'une machine outil et un dispositif de serrage tel qu'un mandrin.

Les figures 6 et 6a concernent un autre mode de réalisation d'un accouplement ou un dispositif d'accrochage entre un organe d'une machine-outil et un dispositif de serrage tel qu'un mandrin.

et     La figure 7 montre encore un autre mode de réalisation d'un accouplement ou un dispositif d'accrochage entre un organe d'une machine-outil et un dispositif de serrage tel qu'un mandrin.

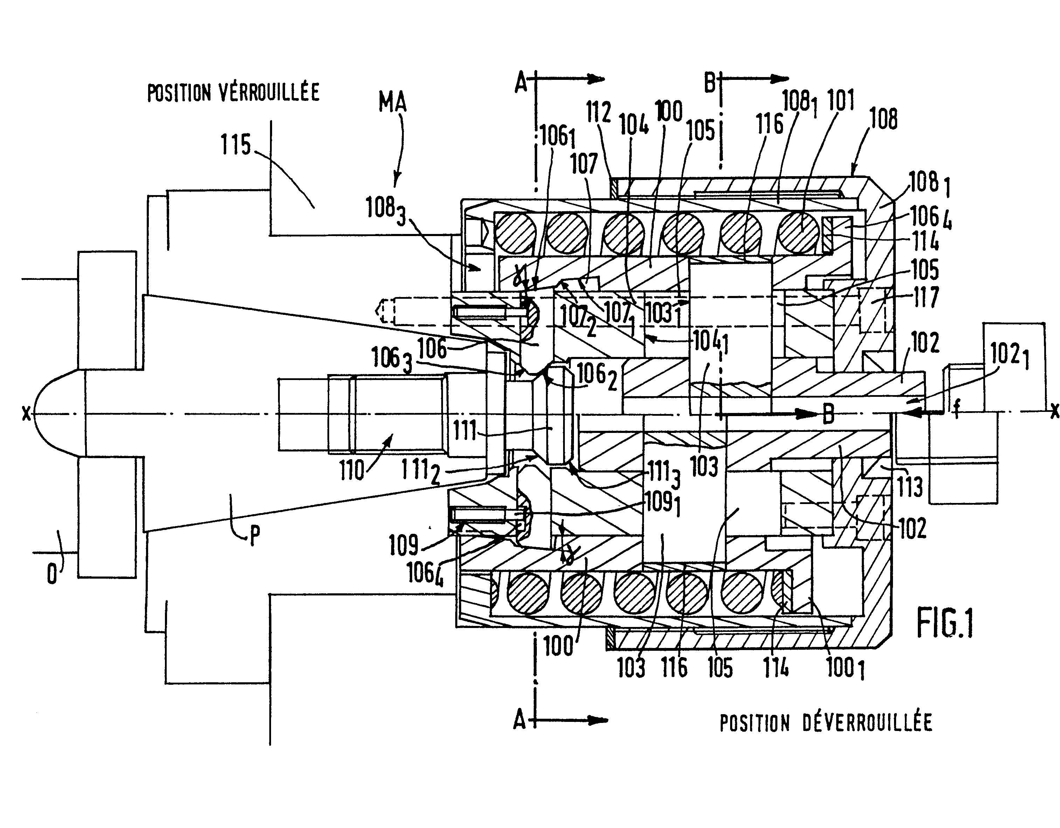

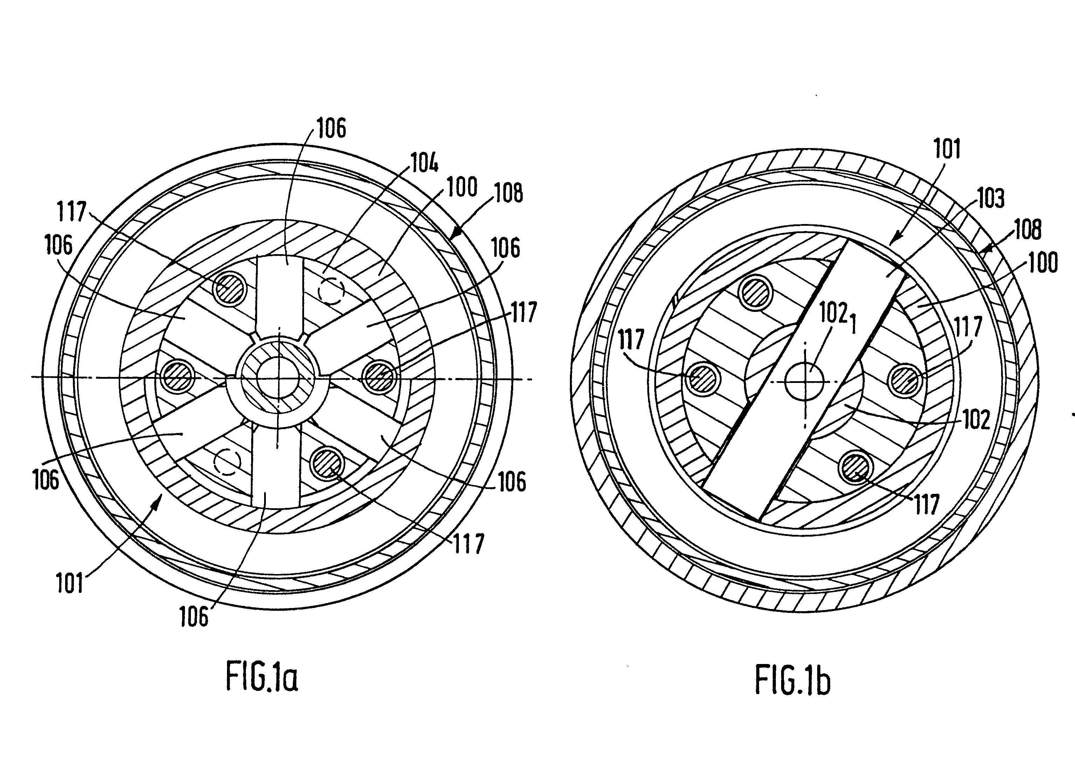

Le dispositif d'accrochage montré dans les figures 1, 1a et 1b est monté dans le bâti (115) de la machine-outil (MA) au moyen de vis de fixation (117) qui traversent le boîtier (108) et le corps (105). A l'avant du dispositif, entre le boîtier (108₁) et le corps (104), il est créé un espace annulaire (108₃) dans lequel peut avancer la partie avant d'un piston (100) réalisé sous forme d'un fourreau et qui est mobile axialement au moyen d'un poussoir (102) sous l'action ou à l'encontre d'un ressort (101), via une goupille (103) maintenue fixe dans ledit piston (100) en deux endroits, qui sont diamétralement opposés (voir fig. 1 et 1b), par un jonc élastique (116). Six logements, par exemple (Fig. 1a), sont prévus dans la partie avant dudit corps (104) pour permettre à des coulisseaux (106) à se déplacer radialement vers l'extérieur pour le déverrouillage de la tête (110) reliée fixe au porte-outil (P), et pour pouvoir se loger dans des évidements ou une gorge circulaire (107) pratiquée sur la face intérieure du piston (100).

Dans la partie supérieure de la figure 1, le dispositif est montré en position de verrouillage de ladite tête (111). Dans cette position, la partie avant (106₁) de la face intérieure du piston-fourreau (100) dont chaque génératrice est légèrement inclinée vers l'avant d'un angle ($\gamma$) entre 3° et 8°, coopère avec la face supérieure (106₁) des coulisseaux (106) ; le piston-fourreau est rétracté par l'action du ressort (101), aucun effort de poussée n'étant exercé sur le poussoir (102). Dans la position de verrouillage, une face inclinée (106₂) d'un angle de 45° environ de chaque coulisseau (106) coopère intimement avec la face inclinée (111₂) de ladite tête (111) pour la maintenir en position de verrouillage. La goupille (103) se trouve dans la lumière rectangulaire (105) du corps (104) sans que ses faces verticales soient en contact avec les faces de ladite lumière (105). Un passage (102₁) axial est prévu dans le poussoir (102) pour permettre l'amenée d'un liquide de refroidissement par exemple ou similaire vers l'outil pendant la période de travail, l'outil étant alors de préférence immobile tandis que la pièce à usiner tourne. L'étanchéité est assurée par le joint (113) entre le poussoir (102) et le boîtier (108₂) et par le joint (112) disposé à l'extrémité de la partie cylindrique (108₁) vissée dans la partie arrière (108₂) en forme de couvercle.

C'est la grandeur de l'angle ($\gamma$) qui définit l'augmentation considérable de l'effet de verrouillage et assure son irréversibilité.

Par l'action d'un vérin, par exemple, sur le poussoir (102) dans le sens de la flèche (f), le poussoir (102) et la goupille (103) entraînent le piston-fourreau (100) dans le sens de la flèche (f) à l'encontre du ressort (101) lors du déverrouillage jusqu'à ce que les évidements ou la gorge (107) soient disposés à l'endroit des coulisseaux (106). Ces derniers peuvent alors se loger dans lesdits évidements ou la gorge (107), soit par gravité, comme on peut le voir dans la partie inférieure de la figure 1 qui montre le dispositif en position de déverrouillage, soit par l'action de la face inclinée ($111_2$) de la tête (111) sur la face inclinée ($106_2$) des coulisseaux (106) lors de l'extraction du porte-outil (P). La face inclinée ($106_1$) du coulisseau (106) vient alors en contact avec la face inclinée ($107_1$) du piston (107). Les parties arrière ($109_1$) de tétons (109) montés fixes dans le corps (104) pénètrent dans des évidements (ou lumières) ($106_4$) pratiqués dans les faces verticales avant des coulisseaux (106); en position de déverrouillage, ces parties ($109_1$) empêchent les coulisseaux (106) de quitter (par gravité par exemple) leurs logements dans le corps (104).

Le verrouillage d'une tête (111) d'un porte-outil (P) s'effectue après la mise au repos du vérin d'actionnement : le poussoir (102) peut donc se déplacer vers l'arrière (dans le sens contraire de la flèche ($f$) sous l'action du ressort (101), les coulisseaux (106) sont appliqués par leurs faces inclinées ($106_2$) contre les faces inclinées ($111_2$) de la tête (111) et le verrouillage irréversible est assuré par la coopération de la face inclinée ($106_1$) des coulisseaux (106) avec la face inclinée ($100_1$) du piston-fourreau (100). Pour faciliter le déplacement radial des coulisseaux (106), lors de l'introduction de la tête (111), cette dernière est pourvue d'une face inclinée ($111_3$) de 30 à 60° environ qui agit sur la face inclinée ($106_3$) des coulisseaux (106). Pour faciliter, en outre, le recul du piston (100) lors du verrouillage, les évidements ou la gorge (107) comporte une partie biseautée ($107_2$) disposée à l'avant desdits évidements ou de ladite gorge (107). Une rondelle (114) de friction peut être prévue pour pallier la rotation éventuelle du ressort (101).

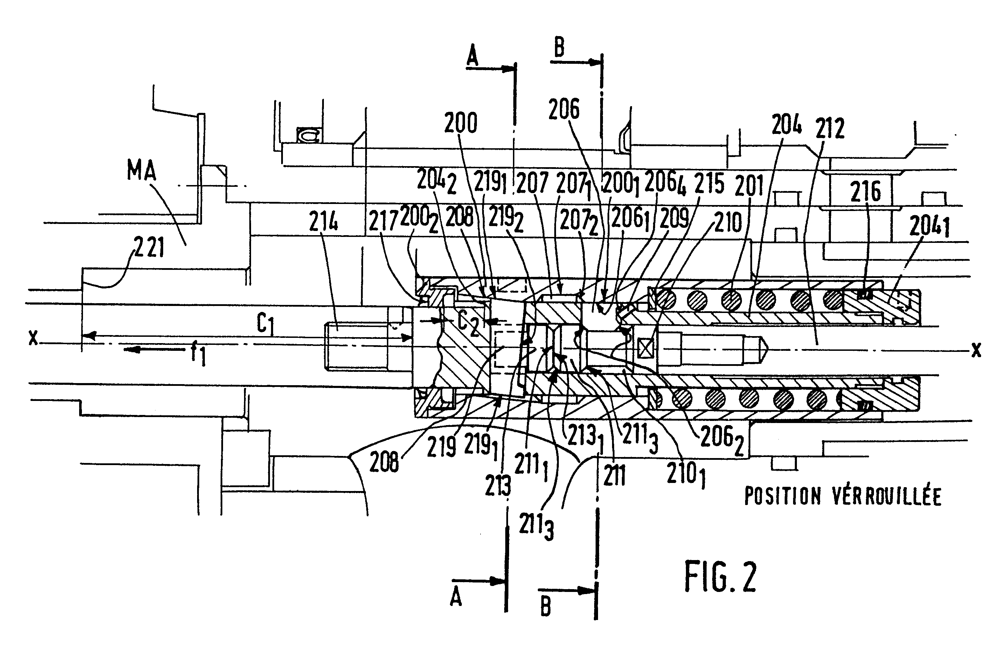

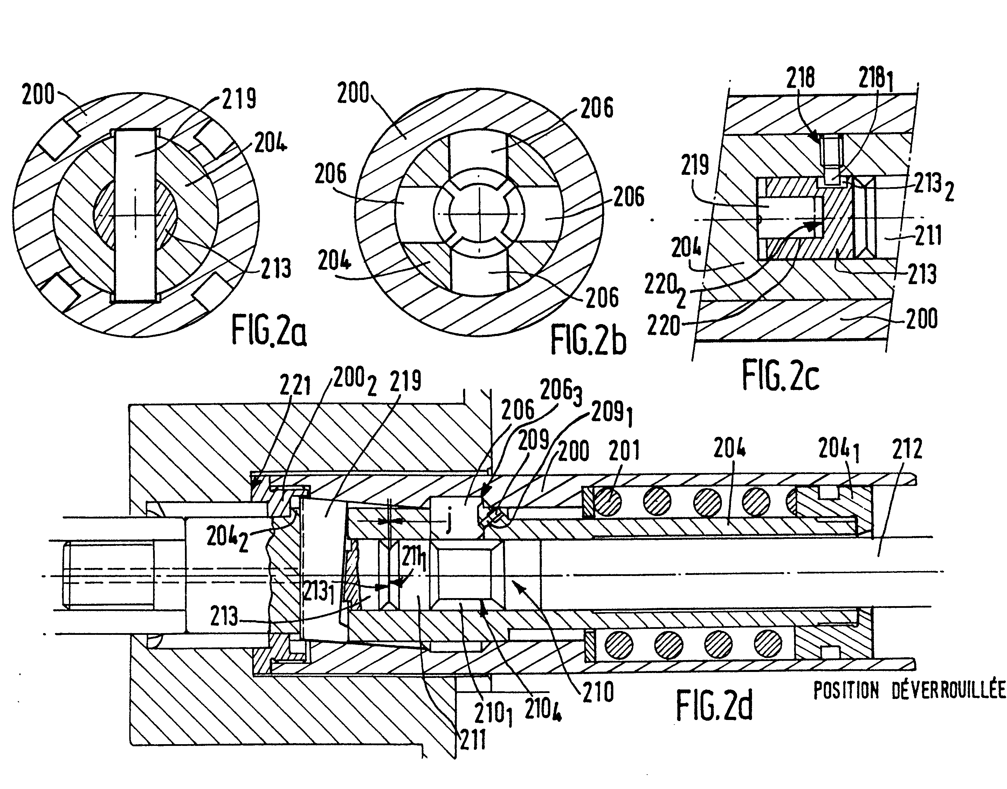

Les figures 2, 2a, 2b et 2c décrivent un dispositif d'accrochage rapide pouvant être monté dans une broche machine (MA), ledit dispositif servant pour maintenir un porte-outil ou outil dont le déplacement longitudinal peut être commandé; l'outil est de préférence tournant tandis que la pièce à usiner est immobile. Le porte-outil ou l'outil (non montré dans les figures) est relié à une tige (212) de commande du déplacement longitudinal de l'outil; cette tige (212) est reliée fixe à un tirant (210) qui comporte à son extrémité arrière une tête (211) qui, en position de verrouillage (figures 2, 2a, 2b) est maintenue en place par quatre coulisseaux (206) par exemple, qui sont appliqués par leurs surfaces supérieures ($206_2$) contre une face cylindrique ($210_4$) d'une gorge ($210_1$) pratiquée dans le tirant (210), ladite tête (211) étant reliée fixe audit tirant (210). L'application des coulisseaux (206) sur la face cylindrique ($210_4$) s'effec-

tue au moyen d'un piston-fourreau (200) dont une partie cylindrique ($200_1$) de sa face intérieure maintient ces coulisseaux en position de verrouillage.

Le piston-fourreau (200) est en outre, à l'arrière de ladite partie cylindrique ($200_1$), sur sa face intérieure pourvue d'évidements ou d'une gorge (207) dont le fond ($207_1$) est cylindrique et dont les extrémités sont biseautées pour faciliter l'entrée et la sortie des coulisseaux (206) lors du verrouillage et du déverrouillage respectivement. A l'arrière de ces évidements ou de cette gorge (207) la face intérieure du piston-fourreau (200) est inclinée d'un angle de 3° à 8°, cette partie inclinée (208) ayant une longueur suffisante pour permettre le déplacement longitudinal dudit piston (200) par rapport à une clavette (219), dont la face ($219_1$), également inclinée, reste en contact avec la face (208) du piston (200) lors de l'opération de déverrouillage. La clavette (219) est logée dans une lumière rectangulaire du corps (204) et traverse en outre une rainure (220) pratiquée dans l'embout (213) relié à une tige (214) de commande reliée elle à la machine-outil, par exemple à un moteur pas à pas (non montré dans les dessins). La face avant ($219_2$) de la clavette (219) est également inclinée d'un angle de 3° à 8° et coopère avec la face avant ($220_2$) de la lumière (220) de l'embout (213). Les coulisseaux (206) ont, sur leurs faces avant, des évidements ($206_4$) dans lesquels est projetée la partie ($209_1$) d'un téton (209) servant au maintien en place desdits coulisseaux en position de déverrouillage lorsque le porte-outil (ou l'outil) a été enlevé.

En position d'accrochage du porte-outil ou de l'outil montré dans la figure 2 par les coulisseaux (206), un verrouillage irréversible à double sécurité est réalisé par la coopération entre la face inclinée ($219_1$) de la clavette (219) et la face inclinée (208) du piston-fourreau (200) d'une part et entre la face avant inclinée ($219_2$) de la clavette (219) et une face inclinée ($220_2$) d'une lumière (220) pratiquée dans l'embout (213) d'autre part. En effet, comme c'est déjà mentionné plus haut, les efforts de verrouillage sont fortement augmentés en fonction de l'angle d'inclinaison qui est, de préférence, entre 3° et 8° ; dans l'exemple montré dans les figures 2 et 2c, ces angles sont de 5° environ.

En outre, en position d'accrochage et de verrouillage à double sécurité, l'outil ou le porte-outil portant l'outil peut être déplacé dans le sens longitudinal de l'axe x - x dans sa broche - machine par l'action d'un moteur pas à pas, dont l'action peut être programmé et s'effectue automatiquement.

Pour le déverrouillage, le moteur pas à pas rétracte l'ensemble du dispositif d'une première course ($C_1$) jusqu'à ce que l'écrou ($200_2$)

du piston (200) bute contre l'appui de desserrage (221); le moteur pas à pas continue son action sur la tige (214) reliée au corps (204). Le ressort (201) est attaqué par l'écrou avant $(204_1)$ du corps (204) et agit sur le piston (200) par l'intermédiaire de la rondelle (215); le ressort (201) est comprimé et le corps (204) se déplace vers l'arrière d'une course $(C_2)$ de déverrouillage dans le sens de la flèche $(f_1)$ jusqu'à ce que l'écrou $(200_2)$ bute contre la partie arrière $(204_2)$ du corps (204), ensemble avec l'outil ou le porte-outil par la tête (211) qui est accroché par les coulisseaux (206) et la clavette (219), sur laquelle agit l'embout (213); lesdits coulisseaux (206) peuvent alors se loger dans les évidements ou dans la gorge (207) (Voir fig. 2c). La tête (211) est libérée et l'outil et/ou le porte-outil peut être enlevé. L'embout (213) peut être maintenu par la projection $(218_1)$ d'un téton (218) qui est monté fixe dans le corps (204), dans une lumière $(213_2)$ pratiquée dans ledit embout (213). Lorsqu'un autre outil ou porte-outil est introduit dans le dispositif, il peut se produire un jeu "j" entre la face avant $(213_1)$ de l'embout (213) et la face arrière $(211_1)$ de la tête (211) (Voir figure 2c), l'accrochage de la tête (211) s'effectuant par les coulisseaux (206) qui se logent dans la gorge $(210_1)$ pratiquée dans la tige (210). Le jeu "j" est rattrapé par le déplacement longitudinal dans le sens contraire à celui de la flèche $(f_1)$ jusqu'à ce que les faces $(213_1)$ et $(211_1)$ soient en contact. Le ressort (201) est détendu et l'accrochage de l'outil ou porte-outil réalisé par les coulisseaux (206). Le déplacement radial des coulisseaux (206) est facilité par les faces inclinées $(206_2)$ et $(206_3)$ des coulisseaux (206) qui coopèrent lors de l'accrochage et du décrochage de l'outil ou le porte-outil avec les faces inclinées $(211_3)$ de la tête (211), et les faces $(207_1)$ et $(207_2)$ des évidements ou de la gorge (207) respectivement. L'étanchéité du dispositif est assurée par le joint (216) et la bague d'étanchéité (217).

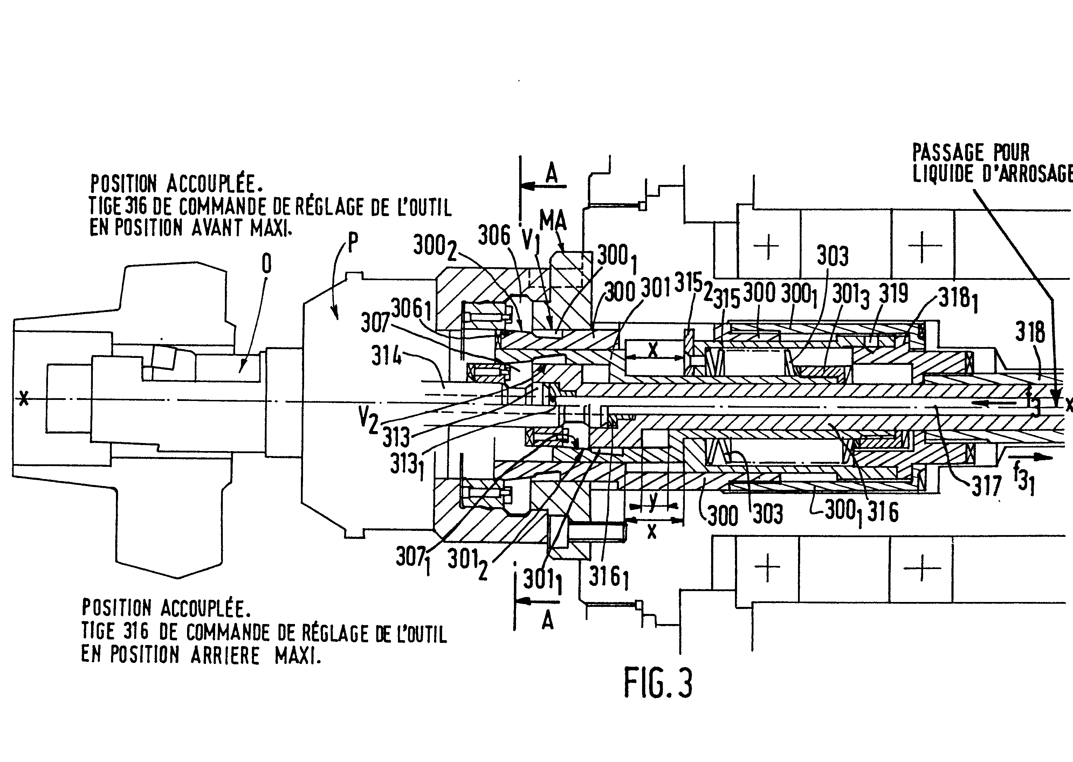

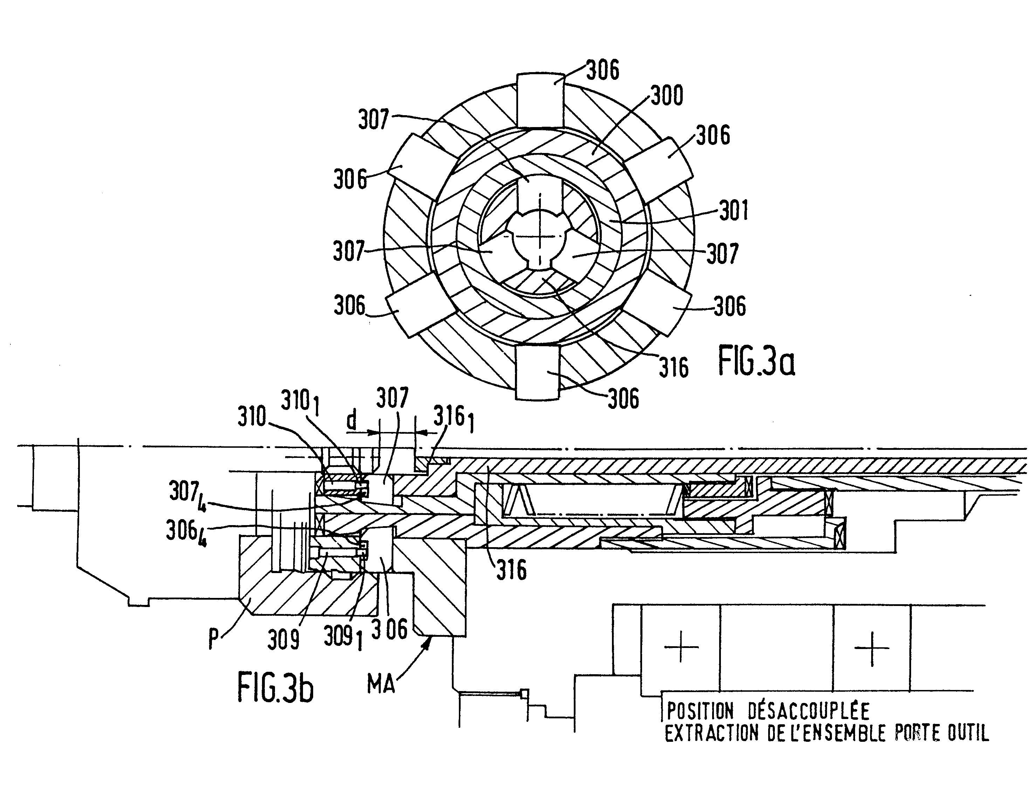

Le mode de réalisation montré dans les figures 3, 3a et 3b est particulièrement intéressant. Il permet au moyen de deux systèmes de verrouillage $(V_1)$ et $(V_2)$ l'accrochage et le verrouillage irréversible simultanés d'un porte-outil et d'un système de déplacement longitudinal d'un outil, ainsi que le déplacement longitudinal dudit outil après l'opération d'accrochage et de verrouillage; il permet, en outre, le rattrapage d'un jeu axial qui peut se produire lors de l'accrochage de la tige (314) de réglage de l'outil. La partie supérieure de la figure 3 montre le porte-outil et le système de déplacement de l'outil en position d'accrochage et de verrouillage irréversible, ledit système de déplacement de l'outil étant en position avant maximale. La partie inférieure de la figure 3 montre le porte-outil et le système de déplacement longitudinal de l'outil en position de verrouillage, ledit système de déplacement de l'outil étant en position arrière maximale. La figure 3b montre le dispositif en position de décrochage et de déverrouillage du porte-outil (P) et l'outil (0).

L'accrochage aussi bien du porte-outil (P) par ledit système $(V_1)$ que de la tête (313) de la tige (314) de réglage de l'outil (0) par ledit système $(V_2)$ s'effectue par des coulisseaux (306) et (307) respectivement, dont les faces $(306_1, 307_1)$ inclinées d'un angle de 3° à 8° coopèrent avec les parties coniques $(300_2, 301_2)$ de la face extérieure d'un premier piston-fourreau (300) et de la face intérieure d'un deuxième piston fourreau (301) qui est disposé coaxialement à l'intérieur dudit premier piston (300) de façon à pouvoir se déplacer dans le sens longitudinal selon l'axe x - x indépendamment dudit premier piston (300). Dans la position montrée dans la partie supérieure de la figure 3, par le déplacement dans le sens de la flèche $(6_{31})$ de la commande (318) reliée fixe à l'écrou $(318_1)$ du tirant (315), le piston (300) a été rétracté en position de verrouillage par l'action dudit écrou $(318_1)$ sur le tirant $(300_1)$ relié fixe audit piston (300). Quasi simultanément avec la rétraction du piston (300), le piston (301) est rétracté en position de verrouillage de la tête (313) de la tige (314) de réglage de l'outil (0) jusqu'à ce que la face arrière $(313_1)$ de ladite tête (313) vient en contact avec la butée $(316_1)$ de la tige (316) de commande du réglage de l'outil (0). Cette rétraction du piston (301) s'effectue par l'action de l'écrou $(318_1)$ et le tirant (315) relié fixe audit écrou $(318_1)$ par au moins une vis pointeau (319); le tirant agit par l'intermédiaire du ressort (303) sur l'écrou $(301_3)$ du piston(301), ledit ressort étant comprimé lors du verrouillage de la tête (313), la tige (316) de commande du réglage de l'outil (0) restant immobile en position avant maximale. Donc en agissant sur cette tige (316) dans le sens de la flèche $(6_3)$ ou dans le sens inverse, il est possible de déplacer longitudinalement selon l'axe x - x l'ensemble : piston (301), coulisseaux (307), tige (316), tête (313), tige (314) et l'outil (0). On peut, par exemple, admettre que la course de déplacement longitudinale maximale est égale à la distance (x). Dans la partie inférieure de la figure 3, la tige de commande (316) est montrée en position arrière maximale. En effet, lorsque l'effort de maintien de la tige (316) est relaché ou lorsque la tige est progressivement déplacée vers l'arrière dans le sens de la flèche $(6_{31})$ par l'action d'un moteur pas à pas logé dans la machine-outil (MA) par exemple, le ressort (303) se détend et permet en appuyant sur l'écrou ($301_3$) à l'ensemble outil (0), tige (314), tête (313), coulisseaux (307), tige (316) et piston (301) de reculer d'une distance maximale (x) jusqu'à ce que le piston (301) bute contre le tirant (315), sans que se produise le verrouillage du porte-outil (P) et/ou de la tête (313). Pour le déverrouillage simultané du porte outil (7) et de la tête (313), la commande (318) agit dans le sens de la flèche ($f_3$) par l'intermédiaire de l'écrou ($318_1$) et le tirant (315) sur les pistons (300, 301) qui se déplacent dans le sens de la flèche ($f_3$) d'une distance (y), par exemple, jusqu'à ce que les évidements ou les gorges ($300_1$, $301_2$) se trouvent à l'endroit des coulisseaux (306,307) permettant à ceux-ci de se loger dans lesdits évidements ou gorges; le porte outil (P) et la tête (313) sont ainsi libérés et peuvent être extraits, comme c'est montré dans la figure 3b (distance d). Les coulisseaux (306, 307) sont pourvus de parties biseautées pour permettre leur sortie et leur entrée desdites gorges, respectivement dans lesdits évidements ou gorges ($300_1$, $301_1$); ces dernières étant pourvues d'une partie biseautée destinée à coopérer avec les parties biseautées correspondantes des coulisseaux pour, notamment, faciliter leur sortie desdits évidements ou gorges lors du verrouillage. Des tétons (309, $309_1$, 310, $310_2$) dont une partie ($309_1$, $310_1$) pénètre dans des lumières ($306_4$, $307_4$) des coulisseaux (306, 307) afin de maintenir ces dernières après verrouillage et l'extraction du porte outil et de l'outil. Lors de l'introduction d'un outil, un jeu peut se produire entre la face ($313_1$) de la tête (313) et la butée ($316_1$) de la tige de commande (316). Ce jeu est rattrapé essentiellement après le verrouillage par l'action du ressort (303) et, éventuellement, par l'action de la tige (316). Un passage (317) pour le liquide d'arrosage de l'outil est prévu sous forme d'un alésage longitudinal dans la tige (316).

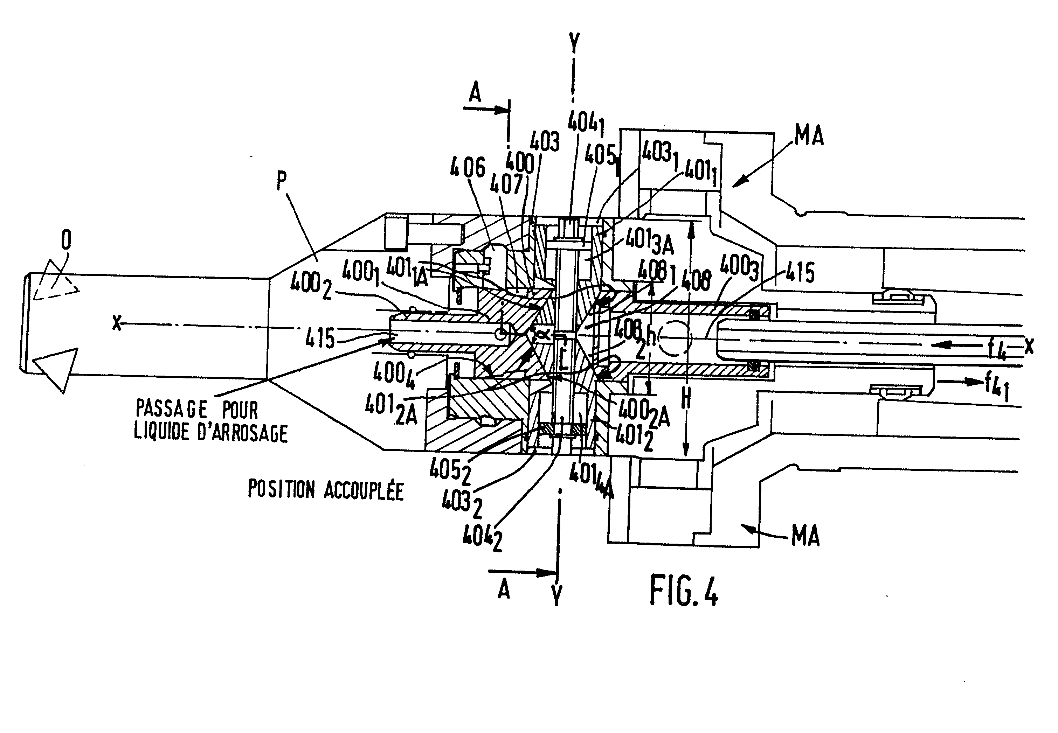

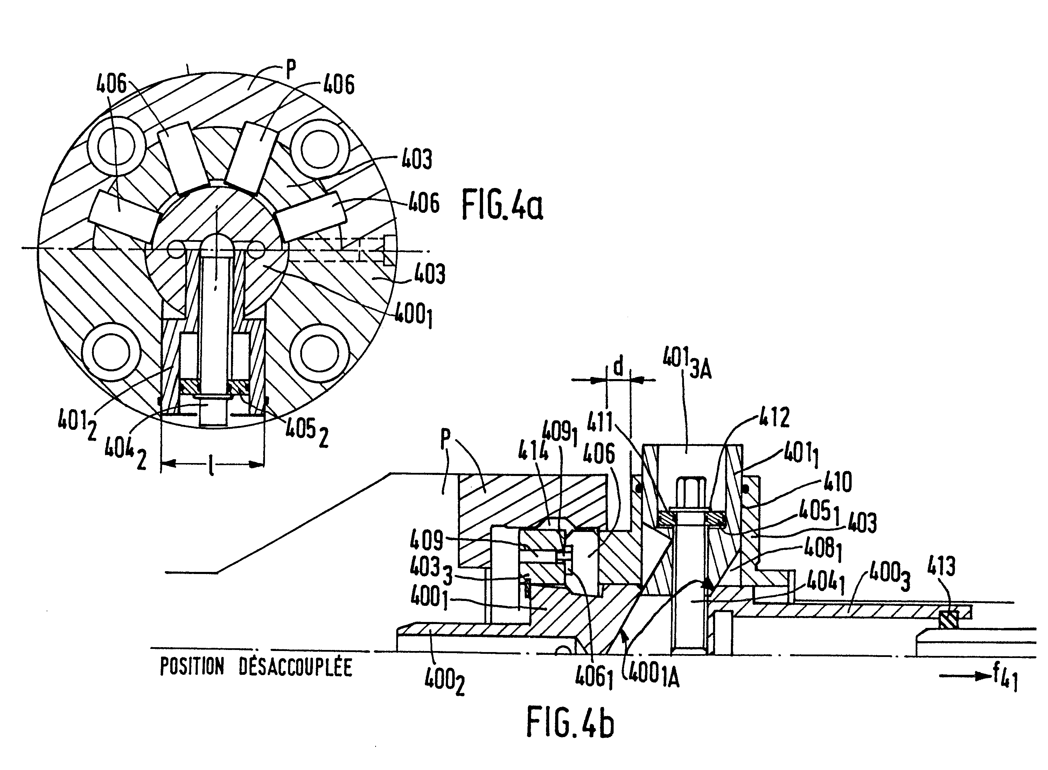

Le mode de réalisation du dispositif montré dans les figures 4, 4a et 4b comporte un piston (400) dont la partie médiane ($400_1$) a un diamètre supérieur à celui de ses autres parties arrière ($400_3$) et avant ($400_2$). Un passage (415) pour le liquide d'arrosage de l'outil traverse ledit piston dans le sens de l'axe x - x. En position de verrouillage, une face inclinée ($400_4$) vers l'arrière dudit piston (400) coopère avec une face des coulisseaux (406), l'inclinaison desdites faces étant entre 3° et 8° et, dans l'exemple montré 5° environ. La partie médiane ($400_1$) du piston (400) montre une lumière verticale (408) dont la largeur est constante, mais dont la longueur (L) varie. Les faces avant et arrière de cette lumière sont réalisées sous forme de deux plans inclinés vers l'arrière; ces plans $(400_{1A}$ , $400_{2A})$, qui constituent la face avant de cette lumière se rencontrent sur l'axe x - x. L'angle $(\alpha)$ entre les dits plans inclinés est entre 90° et 160°. La partie supérieure $(408_1)$ et la partie inférieure $(408_2)$ de cette lumière (408) communiquent avec une lumière supérieure cylindrique $(403_1)$ et une lumière inférieure cylindrique $(403_2)$ respectivement, pratiquées dans le corps (403). Deux glissières $(401_1, 401_2)$ peuvent se déplacer verticalement le long d'un axe y - y dans lesdites lumières, sous l'action des plans inclinés $(400_{1A})$, $400_{2A})$ de la partie $(400_1)$ du piston (400) qui sont en contact avec des plans inclinés $(401_{1A}$ , $401_{2A})$ des parties inférieures desdites glissières $(401_1$ , $401_2)$ les parties supérieures desdites glissières $(401_1$ , $401_2)$ étant cylindriques pour pouvoir se déplacer verticalement dans les lumières $(403_1, 403_2)$ cylindriques dans le corps (403) En position de verrouillage, les glissières $(401_1, 401_2)$ sont dans la position montrée dans la figure 1. Chacune des glissières comporte dans sa partie supérieure un évidement cylindrique $(401_{3A}, 401_{4A})$. Une vis de manoeuvre $(404_1$ , $404_2)$ à deux pas inversés traverse chaque glissière. Une bague d'étanchéité $(405_1, 405_2)$ est montée sur chacune de ces vis directement en dessous de leurs têtes, sur un jonc (412). Lors du déverrouillage, le piston (400) est déplacé vers l'avant dans le sens de la flèche $(f_4)$, jusqu'à ce que les coulisseaux (406) (par exemple huit coulisseaux dans le mode de réalisation montré dans les figures), après avoir quitté le logement (414) dans le porte-outil (P), se logent dans les évidements ou la gorge (407) pratiqués dans la face extérieure de la partie $(400_1)$ du piston (400). Le porte-outil et l'outil peuvent alors être enlevés (voir distance (d) dans la figure 4b). Le mouvement avant du piston (400) a eu pour effet le déplacement vertical vers l'extérieur des glissières $(401_1, 401_2)$ dans les lumières $(408_1, 408_2)$ et $(403_1$ , $403_2)$ du piston (400) et du corps (403) respectivement. Le piston (400), dans son déplacement dans le sens de la flèche $(f_4)$ est arrêté par la butée $(403_3)$ faisant partie du corps (403). Les glissières $(401_1, 401_2)$ s'arrêtent de préférence dans lesdites lumières juste avant d'entrer en contact avec les bagues d'étanchéité $(405_1, 405_2)$. Lorsque le porte-outil (et l'outil) (P) a été enlevé, les coulisseaux sont maintenus par les parties $(409_1)$ des tétons (409) qui pénètrent dans des lumières $(406_1)$ pratiquées dans la face latérale avant de chaque coulisseau (406). Quand on monte un (autre) porte-outil, un léger jeu peut subsister entre le porte-outil (P) et le corps (3). Le verrouillage s'effectuant par le déplacement du piston (400) dans le sens de la flèche $(f_{41})$, les glissières $(401_1, 401_2)$ en descendant dans lesdites lumières, permettent l'absorption du jeu susmentionné grâce à l'action des plans inclinés $(400_{1A}, 400_{2A})$ et $(401_{1A}, 401_{2A})$ du piston $(400)$ et des glissières $(401_1, 401_2)$ respectivement qui, automatiquement, lors de l'opération de verrouillage, permettent le faible déplacement axial supplémentaire du piston $(400)$ qui assure le positionnement sans jeu du porte-outil accroché et verrouillé contre le corps $(403)$.

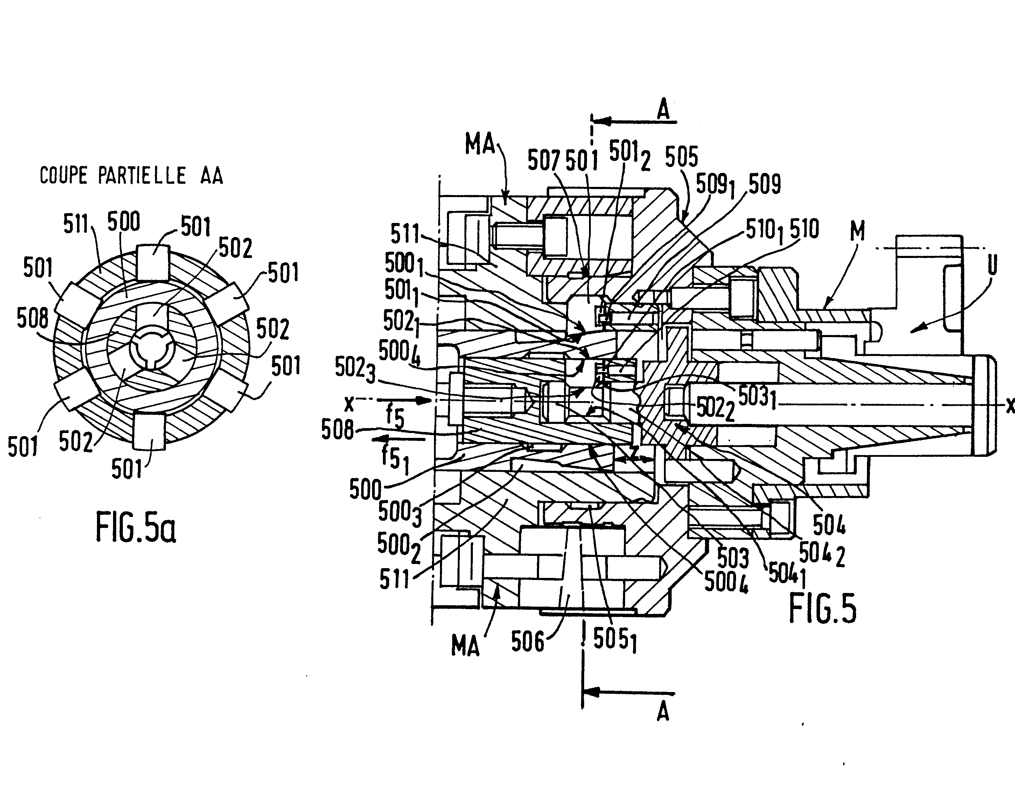

Dans les figures 5 et 5a, il est montré un accouplement et dispositif d'accrochage pouvant être utilisé, notamment pour le maintien et le verrouillage d'organes rotatifs, tels qu'un mandrin de serrage $(M)$. Le mandrin de serrage $(M)$ est monté de façon amovible sur l'organe de la machine-outil $(MA)$ par un moyen d'accouplement comportant des couronnes crantées $(506)$ (voir partie inférieure de la figure 5) ou par d'autres systèmes, exemple système auto-centrant $(507)$ (voir partie supérieure de la figure 5) par exemple. Le mandrin $(M)$ comporte un support $(505)$ qui est pourvu dans son alésage, qui coopère avec le corps $(511)$ de l'organe de la machine-outil $(MA)$ -, des évidements (ou une gorge) $(505_1)$ destinés à loger; en position de verrouillage des premiers coulisseaux $(501)$ d'accrochage et de verrouillage irréversible du mandrin $(M)$.

Les faces inférieures $(501_1)$ desdits coulisseaux $(501)$ sont inclinées d'un angle de 3° à 8° (dans l'exemple montré, l'angle d'inclinaison est de l'ordre de 5°). Ces faces $(501_1)$ coopèrent, en position de verrouillage irréversible, avec la partie avant conique $(500_1)$ de la face extérieure d'un premier piston $(500)$ réalisé sous forme d'un fourreau. A l'arrière de cette partie conique $(500_1)$, la face extérieure dudit piston $(500)$ est pourvu d'évidements (ou d'une gorge) $(500_2)$ qui sont conformés pour y loger, en position de déverrouillage du dispositif, lesdits coulisseaux $(501)$. La face avant intérieure du piston $(500)$ comprend une partie cylindrique $(500_4)$ dont la longueur est sensiblement égale à ladite partie conique $(500_1)$ de la face extérieure du piston $(500)$. Cette partie cylindrique $(500_4)$ est suivie par des évidements (ou une gorge) $(500_3)$ qui sont conformés pour y loger, en position d'accrochage, des moyens de commande de serrage ou de desserrage du mandrin $(M)$, des coulisseaux $(502)$. Les évidements (ou la gorge) $(500_2)$ et $(500_3)$ sont disposés de façon à ce que leurs entrées (pour le déverrouillage) ou leur sortie (pour le verrouillage) sont sensiblement dans un même plan vertical par rapport à l'axe x - x. Ainsi, l'accrochage du dispositif et des moyens de commande de serrage (et de desserrage) du mandrin $(M)$ s'effectuent quasi simultanément, ainsi que le verrouillage irréversible du dispositif par la coopération des faces inclinées $(501_1)$ des coulisseaux $(501)$ et de la partie conique $(500_1)$ du

piston (500).

De même, le décrochage et le déverrouillage s'effectuent quasi simultanément. Un deuxième piston (508) est disposé coaxialement dans l'alésage dudit premier piston (500), de manière à ce que la face extérieure dudit deuxième piston (508) soit en contact avec la face intérieure dudit premier piston (500), ledit piston (508) pouvant se déplacer longitudinalement indépendamment dudit premier piston (500). Ce piston (508) comporte dans sa partie avant des lumières pour y loger des deuxièmes coulisseaux (502) dont les faces supérieures ($502_1$) sont conformées pour pouvoir se déplacer, en position de verrouillage du dispositif, dans le sens longitudinal avec le piston (508), tout en restant en contact avec la face intérieure ($500_4$) cylindrique du piston-fourreau (500) et restant ainsi en position d'accrochage des moyens de commande du mandrin (M). Les faces intérieures ($502_3$) desdits deuxièmes coulisseaux (502) sont conformés pour épouser, en position d'accrochage des moyens de commande de serrage (et de desserrage) du mandrin (M), la face extérieure d'une partie ($504_1$) de la tige de commande (504) desdits moyens de serrage ( et de desserrage) du mandrin (M) qui est située entre une tête (503) et une partie ($504_2$). de ladite tige (504), etc... dont le diamètre est inférieur à celui de ladite tête (503) de la tige de commande (504). Une gorge ($500_3$) est ainsi formée dans laquelle peuvent se loger, en position de décrochage, lesdits coulisseaux (502).

En position de verrouillage du dispositif (montré dans la figure 5), le piston (508) peut être déplacé, indépendamment du piston (500) dans le sens des flèches ($f_5$, $f_{51}$ ) pour le serrage et le desserrage du mandrin (M). Lors de l'opération de décrochage et de déverrouillage, le piston (500) est déplacé d'une distance (z) vers l'avant dans le sens de.la flèche ($f_5$) jusqu'à ce que les coulisseaux (501) et (502) se logent dans les évidements (ou gorges) ($500_2$) et ($500_3$) respectivement, ce qui permet l'extraction de la tête (503) et l'enlèvement du mandrin (M) entier, son support (505) n'étant plus retenu et verrouillé. Lorsque le mandrin (M) est enlevé, les coulisseaux (501) et (502) sont maintenus par les parties ($509_1$) et ($510_1$) des tétons (509) et (510), qui pénètrent dans les lumières ($501_2$) et ($502_2$) desdits coulisseaux.

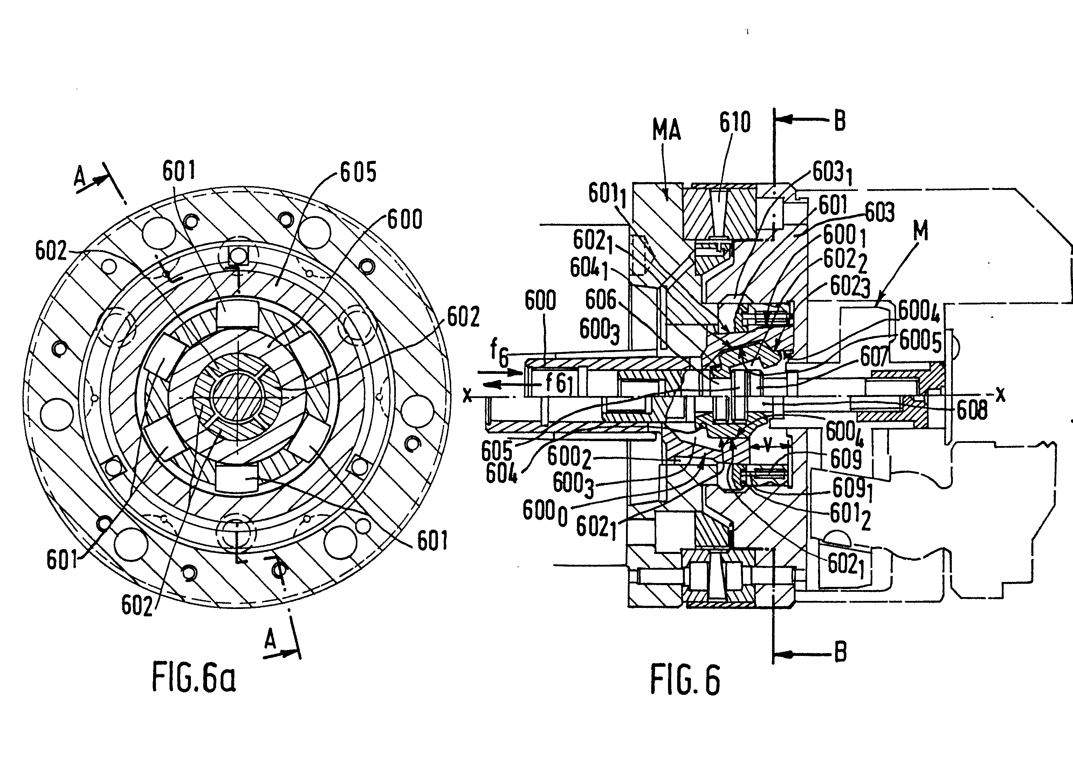

Le principe de fonctionnement du mode de réalisation montré dans les figures 6 et 6a est semblable à celui montré dans la figure 5. Toutefois, la réalisation constructive est différente. Le seul piston (600) sert pour l'accrochage aussi bien du dispositif de serrage, tel qu'un mandrin (M), qui pour les moyens de commande de serrage ( et de desserrage), ainsi que pour le verrouillage irréversible dudit dispositif de serrage. En position d'accrochage et de verrouillage (voir la partie inférieure de la figure 6), une partie $(600_0)$ de commande d'accrochage et de verrouillage est disposée de façon à ce que la partie conique $(600_1)$ du piston coopère avec les faces $(601_1)$ des coulisseaux $(501)$ qui sont alors logés dans des évidements (ou une gorge) $(603_1)$ du support $(603)$. Le support $(603)$ est par exemple relié à l'organe de la machine-outil (MA) par des moyens d'accouplement sous forme de couronnes crantées $(610)$. La face inférieure de ladite partie $(600_0)$ de commande dudit piston-fourreau $(600)$ montre un évidement $(600_3)$ circulaire destiné à loger le corps des mors $(602)$ en position de décrochage des moyens de commande de serrage et de desserrage du dispositif de serrage tel qu'un mandrin (M). Dans l'exemple montré, le dispositif d'accrochage et de verrouillage comporte six coulisseaux $(601)$ et quatre mors $(602)$. En position d'accrochage et de verrouillage irréversible, une face $(600_4)$ constituant la partie avant dudit piston $(600)$ appuie sur la face $(602_1)$ extérieure des mors $(602)$ de manière à ce que ces mors $(602)$ maintiennent emprisonnées, à l'encontre d'un ressort $(604)$, dans des évidements $(602_2)$, les têtes $(605)$ et $(607)$ de la tige $(606)$ de commande de serrage et de desserrage de la machine-outil (MA) et la tige $(608)$ amovible de commande de serrage et de desserrage du mandrin du dispositif d'accrochage et de verrouillage. C'est dans la position d'accrochage qu'une action de la tige $(606)$ dans le sens des flèches $(f_6)$ ou $(f_{61})$ peut éventuellement être exécutée pour le desserrage et le serrage du mandrin respectivement, un jeu $(j_1)$ devant être éventuellement absorbé lors du desserrage, les faces $(602_1)$ des mors $(602)$ pourraient alors se déplacer dans le sens de l'axe x - x par rapport au piston $(600)$, qui reste immobile. Pour le décrochage et le déverrouillage, après le desserrage du mandrin (M), le piston $(600)$ avance dans le sens de la flèche $(f_6)$ sur une distance "v", permettant ainsi aux coulisseaux $(601)$ de se loger dans des évidements (ou une gorge) $(600_3)$ du piston $(600)$, et aux mors $(602)$ de pivoter autour du ressort $(604)$ à spire jointive dont l'axe horizontal est également l'axe de pivotement $(604_1)$ de chacun des mors $(602)$. Les mors $(602)$ se logent dans lesdits évidements $(600_3)$ du piston $(600)$, les faces supérieures $(602_1)$ desdits mors étant sensiblement parallèles à la face $(600_5)$ de l'évidement $(600_3)$ du piston $(600)$. Le dispositif d'accrochage avec lesdits moyens de commande de serrage (et de desserrage) du mandrin (M) peut être enlevé. Les coulisseaux $(601)$ sont maintenus par les projections $(609_1)$ des tétons $(609)$ qui pénètrent dans des lumières $(601_2)$ pratiquées dans lesdits coulisseaux $(601)$.

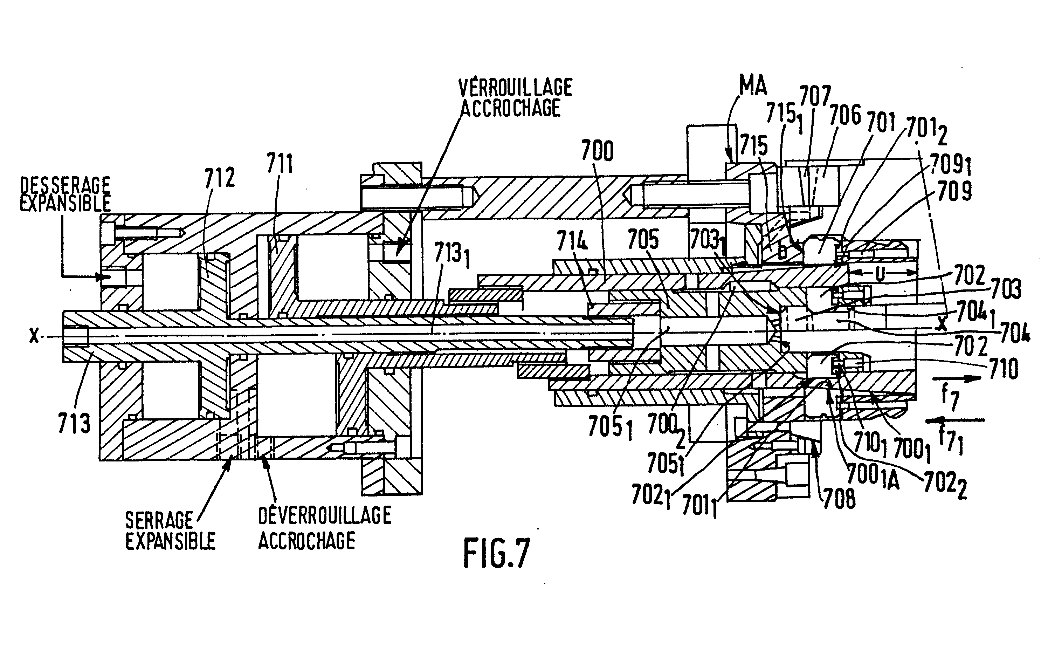

Dans le mode de réalisation de la figure 7, le support (706) du dispositif d'accrochage et de verrouillage irréversible est relié à l'organe de la machine outil (MA) par un moyen d'accouplement pouvant être des couronnes crantées (707) ou autres systèmes auto-centrants (non représentés). En position d'accrochage et de verrouillage du dispositif, montré dans la partie supérieure de la figure, une partie conique $(700_1)$ d'un piston-fourreau (700) coopère avec les faces inclinées $(701_1)$ des premiers coulisseaux (701). La face intérieure dudit piston-fourreau (700) est cylindrique; elle maintient des deuxièmes coulisseaux (702) dans une gorge $(704_1)$ de la tige (704) amovible de commande de serrage (et de desserrage) d'un mandrin, par exemple. Les coulisseaux (702) maintiennent et emprisonnent, en position d'accrochage, une tête (703) reliée fixe à ladite tige (704). Dans la figure 7, la tige se trouve en position de desserrage du mandrin. Le serrage et le desserrage du mandrin est commandé par un fluide sous pression agissant sur un piston (712) relié à une tige de commande (713, 714, 705). Un passage $(713_1, 705_1)$ est prévu dans la dite tige de commande (713, 714, 705) pour l'amenée d'un fluide de nettoyage lorsque le dispositif d'accrochage et de verrouillage est déverrouillé et, de préférence, au moins partiellement enlevé. La partie conique $(700_1)$ du piston (700) a une longueur (b) telle que les coulisseaux (701), en position de désaccrochage et de déverrouillage, sont disposées sur une partie arrière $(700_{1A})$ de ladite partie conique $(700_1)$. (VOIR la partie inférieure de la figure 7, qui montre la position de décrochage et de déverrouillage). Pour le décrochage et le déverrouillage, le piston (700) est avancé d'une distance (b) au moyen d'un système à fluide (711). Les coulisseaux (701) ayant glissé le long de la pente de la partie conique $(700_1)$ reposent sur la partie $(700_{1A})$. Ils sont alors suffisamment rétracté dans les lumières $(715_1)$ de l'organe (715) de la machine-outil (MA) pour permettre l'enlèvement du dispositif d'accrochage et de verrouillage qui est, en outre, rendu possible parce qu'après le desserrage du mandrin, la tête (703) de la tige (704) est également libérée, étant donné que lesdits deuxièmes coulisseaux (702), par l'avance du piston (700), ont pu se loger dans des évidements (ou une gorge) $(700_2)$, la face intérieure cylindrique dudit piston-fourreau (700) ayant glissé sur les faces supérieures $(702_1)$ des coulisseaux (702). Lorsque ledit dispositif et les moyens de commande de serrage (et de desserrage) ont été enlevés, les coulisseaux (701) et (702) sont maintenus par les projections $(709_1)$ et $(710_1)$ des tétons (709) et (710), qui pénètrent dans des lumières $(701_2)$ et $(702_2)$ desdits coulisseaux (701) et (702).

Après desserrage du mandrin, une arrivée d'air (708) peut être prévue pour nettoyage lors du désaccouplement.

**0189697**

De nombreuses modifications et perfectionnements peuvent être apportés aux accouplements ou aux dispositifs d'accrochage décrits ci-dessus, sans pour autant sortir du cadre de l'invention.

# R E V E N D I C A T I O N S

1.) - Accouplement ou dispositif d'accrochage rapide entre un organe d'une machine-outil et un système de maintien tel qu'un porte-outil ou d'un dispositif de serrage tel qu'un mandrin, caractérisé en ce qu'il comporte au moins un système de verrouillage irréversible et, éventuellement, un système de rattrapage de jeu., à verrouillage irréversible, ce rattrapage de jeu pouvant se produire lors de l'échange d'un desdits systèmes pour un autre système, l'irréversibilité du verrouillage étant réalisée par des moyens comprenant des surfaces de contact qui, en position de blocage, coopèrent en position de verrouillage et de déverrouillage avec des surfaces de contact correspondantes des organes commandant le verrouillage et le déverrouillage, avec chaque génératrice desdites surfaces de contact étant inclinée d'un angle allant de 3 ° à 14° par rapport à une ligne parallèle à l'axe longitudinal ou à une ligne perpendiculaire à l'axe longitudinal de l'accouplement.

2.) - Accouplement ou dispositif d'accrochage rapide selon la revendication 1, caractérisé en ce que ledit angle a une valeur entre 3° et 10°.

3.) - Accouplement ou dispositif d'accrochage rapide selon la revendication 1 ou la revendication 2, caractérisé en ce que ledit angle a une valeur entre 3° et 8°, et de préférence entre 4° et 8°.

4.) - Accouplement ou dispositif d'accrochage rapide selon l'une des revendications précédentes, caractérisé en ce que lesdits moyens de verrouillage sont réalisés sous forme d'au moins un coulisseau qui, en position de déverrouillage, se loge dans au moins un évidement ou dans une gorge pratiqué dans lesdits organes commandant le verrouillage et le déverrouillage, ledit évidement ou gorge pouvant être biseauté pour faciliter l'entrée et la sortie dudit coulisseau.

5.) - Accouplement ou dispositif d'accrochage rapide selon l'une des revendications précédentes, caractérisé en ce que des moyens sont prévus pour limiter le déplacement desdits moyens de verrouillage ou de rattrapage de jeu, lors des opérations de verrouillage et de déverrouillage, lesdits moyens comprenant un téton dont une extrémité est montée fixe dans un organe indépendant desdits organes de commande de verrouillage et de déverrouillage tel qu'un organe de la machine-outil et dont l'autre extrémité fait saillie dans un évidement permettant la retenue desdits moyens de verrouillage ou de rattrapage de jeu.

6.) - Accouplement ou dispositif d'accrochage rapide selon l'une des revendications précédentes, caractérisé en ce que ladite surface inclinée dudit coulisseau coopère en position de déverrouillage avec une surface inclinée dudit évidement ou de ladite gorge pratiqué dans ledit organe de commande , une autre surface inclinée dudit organe de commande ayant une inclinaison identique à celle de la surface dudit coulisseau coopérant avec cette surface inclinée en position de verrouillage.

7.) - Accouplement ou dispositif d'accrochage rapide selon l'une des revendications précédentes, caractérisé en ce que ledit coulisseau comporte au moins une partie biseautée à son extrémité opposée à celle qui est en contact avec ledit organe de commande, l'angle d'inclinaison de la partie biseautée étant de 30° à 60° par rapport à l'axe vertical dudit coulisseau passant par lesdites extrémités, ladite partie biseautée étant en contact, en position de verrouillage, avec une face correspondante d'un organe indépendant dudit organe de commande.

8.) - Dispositif d'accrochage rapide ayant les caractéristiques selon l'une des revendications 1 à 7, caractérisé en ce que ledit organe de commande est réalisé sous forme d'un piston (100) pouvant être déplacé, dans le sens du déverrouillage, à l'encontre d'un moyen élastique (101) au moyen d'un poussoir (102) par l'intermédiaire d'une goupille (103) pouvant se déplacer parallèlement à l'axe longitudinal de l'accouplement dans une lumière rectangulaire (105) pratiquée dans le corps (104), ladite goupille étant en contact avec la face antérieure ($103_1$) de ladite lumière (105) en position de déverrouillage, des coulisseaux (106) étant alors logés dans des évidements ou une gorge (107) dudit piston (100).

9.) - Dispositif d'accrochage rapide selon l'une des revendications 1 à 7 et qui peut être monté dans une broche d'une machine-outil, caractérisé en ce qu'il comprend un organe de commande réalisé sous forme d'un piston (200) ayant la forme générale d'un fourreau qui peut se déplacer dans le sens longitudinal, lors du déverrouillage à l'encontre d'un moyen élastique (201) et qui comporte des premiers évidements ou une gorge (207) pour y loger, en position de déverrouillage, au moins un coulisseau (206) et une partie conique (208) dont l'inclinaison va de l'avant vers l'arrière, l'angle d'inclinaison étant entre 3° et 8°, ladite partie conique (208) coopérant avec une clavette (219) de rattrapage d'un jeu axial pouvant se produire entre la face ($211_1$) arrière de la tête (211) du tirant (210) amovible qui est relié fixe à la tige de commande (212) du mouvement d'un outil et la face avant ($213_1$) d'un embout (213), qui est en liaison avec une tige (214) de commande reliée à la machine-outil, lors d'un changement de l'outil ou analogue; ladite face supérieure ($219_1$) de ladite clavette (219) étant inclinée d'un angle entre 3° et 8° destinée à coopérer avec ladite partie conique (208) dudit piston, et la face avant $(219_2)$ de ladite clavette étant inclinée d'un angle de 3° à 8° pour coopérer avec une face avant inclinée $(220_2)$ d'une lumière (220) dans l'embout (213), de façon à ce que, en position de verrouillage la face avant $(213_1)$ de la tête (213) est appliquée sans jeu contre la face $(211_1)$ arrière de la tête (211) de la tige (210) amovible, assurant ainsi une double sécurité de verrouillage par ladite clavette (219).

10.) - Accouplement ou dispositif d'accrochage rapide selon l'une des revendications 1 à 7, caractérisé en ce qu'il comprend un premier système de verrouillage $(V_1)$ d'un porte-outil (P) commandé par un premier piston (300) réalisé sous forme d'un fourreau dont les évidements ou une gorge $(300_1)$ logent en position de déverrouillage des premiers coulisseaux (306) et dont une face conique $(300_2)$ coopère avec une face inclinée $(306_1)$ des coulisseaux (306) en position de verrouillage; et en ce qu'il comprend un deuxième système de verrouillage $(V_2)$ de la tête (313) de la tige (314) commandant le réglage de l'outil (0), ledit système $(V_2)$ comprenant un deuxième piston (301) de commande réalisé sous forme d'un fourreau dont les évidements ou une gorge $(301_1)$ logent en position de déverrouillage des deuxièmes coulisseaux (307) et dont une face conique $(301_2)$ coopère avec une face inclinée $(307_1)$ desdits coulisseaux (307) en position de verrouillage et de réglage de la position de l'outil (0), ledit deuxième système $(V_2)$ étant disposé coaxialement dans ledit premier système; un système élastique (303) étant prévu pour faciliter le déplacement de ladite tête (313) et de la tige de commande de réglage (316) de l'outil faisant partie dudit deuxième système $(V_2)$ vers sa position rétractée, ainsi que pour assurer le rattrapage d'un jeu axial ayant pu se produire, éventuellement, lors de l'échange d'un porte-outil (P) pour un autre, entre la face $(313_1)$ arrière de la tête (313) de la tige (314) de réglage de l'outil et une butée $(316_1)$ reliée fixe à ladite tige (316) de réglage de l'outil.

11.) - Dispositif d'accrochage rapide d'un porte-outil et un organe d'une machine-outil selon l'une des revendications 1 à 7, caractérisé en ce que le piston (400) est pourvu d'évidements ou d'une gorge (407) pour y loger, en position de déverrouillage, des coulisseaux (406), ledit piston (400) étant pourvu dans sa partie active $(400_1)$, dont le diamètre peut être supérieur à celui de ses autres $(400_2, \ 400_3)$, d'une lumière (408) verticale dont la largeur est constante sur toute sa hauteur (h) tandis que sa longueur (L) varie de façon à ce que sa face avant est réalisée sous forme de deux plans inclinés $(400_{1A}, \ 400_{2A})$, l'angle ( $\alpha$ ) entre ces deux plans inclinés étant entre 90° et 160°; deux glissières $(401_1, \ 401_2)$

étant disposées dans la partie supérieure $(408_1)$ et la partie inférieure $(408_2)$ de ladite lumière (408) et dans des lumières supérieures $(403_1)$ et inférieure $(403_2)$ du corps (403) de façon à pouvoir se déplacer vers le haut et le bas desdites lumières respectivement, en position de déverrouillage, le long des vis $(404_1 , 404_2)$ de manoeuvre à deux pas inversés jusqu'à des bagues $(405_1, 405_2)$ d'étanchéité disposées dans des évidements $(401_{3A}, 401_{4A})$ desdites glissières $(401_1, 401_2)$ des moyens $(400_{1A}, 400_{2A}, 401_{1A}, 401_{2A})$ étant prévus pour modifier la position verticale desdites glissières $(401_1, 401_2)$ dans les dits évidements $(403_1, 403_2)$ du corps (403) afin de permettre un rattrapage d'un jeu éventuel provoqué lors de l'échange d'un porte-outil (P) contre un autre porte-outil.

12.) - Accouplement ou dispositif d'accrochage rapide selon l'une des revendications 1 à 7, caractérisé en ce que le piston $(500_2, 600_2)$ est réalisé sous forme d'un fourreau qui est pourvu sur sa face extérieure de premiers évidements ou d'une première gorge $(500_1, 600_1)$ pour y loger, en position de déverrouillage des premiers moyens (501, 601) servant pour le verrouillage irréversible d'un mandrin (M), lors de son accouplement sur un organe (MA) de la machine-outil, ledit verrouillage irréversible étant obtenu grâce à une partie conique $(500_1, 600_1)$ située en amont desdits premiers évidements $(500_2, 600_2)$ ou de ladite première gorge; la face intérieure dudit piston-fourreau (500, 600) étant pourvu de deuxièmes évidements ou d'une deuxième gorge $(500_3, 600_3)$ pour y loger des deuxièmes moyens (502, 602) servant pour le verrouillage des moyens de commande de serrage et de desserrage (503,504,603,604) dudit mandrin (M); le déverrouillage du porte mandrin (505,605) et du mandrin (M) quasi simultané par lesdits moyens de serrage et de desserrage (501, 502, 601, 602) étant effectué par le déplacement avant dans le sens longitudinal dudit piston (500, 600).

13.) - Accouplement selon la revendication 12, caractérisé en ce que lesdits premiers moyens sont réalisés sous forme de coulisseaux (501) dont la face inférieure est inclinée pour coopérer en position de verrouillage avec ladite partie conique $(500_1)$ de la face extérieure dudit piston-fourreau (500) ; et en ce que lesdits deuxièmes moyens sont réalisés sous forme de coulisseaux (502) dont aussi bien la face supérieure que la face inférieure sont parallèles à des plans cylindriques dont l'axe est l'axe longitudinal x-x du dispositif pour pouvoir se loger, lors du déverrouillage, dans lesdits deuxièmes évidements ou ladite deuxième gorge $(500_3)$ de façon à pouvoir être, sur toutes leurs longueurs, en contact avec ceux-ci ou celle-ci.

14.) - Accouplement ou dispositif d'accrochage rapide selon la revendication 12, caractérisé en ce que lesdits premiers moyens sont réalisés sous forme de coulisseaux (601) dont les faces inférieures sont inclinées pour coopérer, en position de verrouillage, avec ladite partie conique $(600_1)$ de la face extérieure dudit piston-fourreau (600) ; et en ce que lesdits deuxièmes moyens sont réalisés sous forme de mors (602) pouvant pivoter vers l'extérieur par l'action d'un moyen élastique (604) pour se mettre en position de déverrouillage de façon à ce que leurs faces supérieures sont alors appliquées contre les faces desdits deuxièmes évidements ou de ladite deuxième gorge $(600_3)$, tandis qu'en position de verrouillage, un évidement $(602_2)$ pratiqué dans la face inférieure de chacun desdits mors (602) emprisonne les têtes (605, 607) des tirettes de commande de serrage d'un mandrin (M) fixe (606) et amovible (608) respectivement, les faces supérieures $(602_1)$ desdits mors (602) étant maintenues en position de verrouillage , à l'encontre dudit moyen élastique (604), par une face $(600_4)$ disposée à l'extrémité avant de la partie intérieure dudit piston-fourreau (600), ladite face $(600_4)$ étant parallèle à un plan horizontal passant par l'axe longitudinal x - x du dispositif.

15.) - Accouplement ou dispositif d'accrochage rapide selon l'une des revendications 1 à 7, caractérisé en ce que le piston (700) est réalisé sous forme d'un fourreau dont la face extérieure, à son extrémité avant, est conique sur une longueur (a) relativement importante, de façon à ce qu'en position de déverrouillage des premiers coulisseaux (701) ayant des faces inférieures inclinées pour pouvoir glisser sur ladite face $(700_1)$ conique dudit piston fourreau (700) lors de son déplacement de la position de verrouillage vers la position de déverrouillage, sont disposés sur la partie arrière $(700_{1A})$ de ladite partie conique $(700_1)$ de façon à permettre le dégagement de la partie amovible de l'accouplement; et dont la face inférieure est pourvue d'évidements ou d'une gorge $(700_2)$ pour y loger, en position de déverrouillage, des deuxièmes coulisseaux (702) ayant leurs faces supérieure et inférieure parallèles à un plan horizontal passant par l'axe longitudinal de l'accouplement de façon à permettre le dégagement de la tête (703) de la tige de commande (704) de serrage et de desserrage du mandrin.

POSITION VÉRROUILLÉE

MA

POSITION DÉVERROUILLÉE

FIG.1

1/11

0189697

0189697

FIG.1b

FIG.1a

FIG.2

POSITION VÉRROUILLÉE

0189697

FIG.2a

FIG.2b

FIG.2c

FIG.2d

POSITION DÉVERROUILLÉE

4/11

0189697

FIG.3

FIG.3a

FIG.3b

POSITION DÉSACCOUPLÉE
EXTRACTION DE L'ENSEMBLE PORTE OUTIL

0189697

PASSAGE POUR
LIQUIDE D'ARROSAGE

POSITION ACCOUPLÉE

FIG.4

0189697

FIG.4a

FIG.4b

POSITION DÉSACCOUPLÉE

FIG.5

COUPE PARTIELLE AA

FIG.5a

FIG.6a

FIG.6

0189697

0189697

FIG.7

Office européen
des brevets

**RAPPORT DE RECHERCHE EUROPEENNE**

**0189697**
Numéro de la demande

EP 85 40 2534

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-3 045 536 (BLESSING) <br> * Page 12; page 13; page 14, alinéa 1; figures 1-4 * | 1-9,15 | B 23 B 31/26 <br> B 23 Q 3/12 <br> B 23 B 29/034 <br> B 23 B 31/16 <br> B 23 B 31/04 |
| A | EP-A-0 086 379 (TBT) | | |
| A | MACHINES & TOOLING, vol. 45, no. 2, 1974, pages 33-35, Production Engineering Research Ass., Melton Mowbray, GB; V.A. BURKOV: "Hydraulic and spring actuated systems for mechanized tool clamping" <br> * Page 35; figure 3C * | 1,12, 14 | |
| A | DE-A-1 602 774 (FORKARDT) | 1 | **DOMAINES TECHNIQUES RECHERCHES (Int. Cl.4)** |
| A | DE-C- 724 892 (MASCHINENFABRIK DEUTSCHLAND) | | B 23 B 31/00 <br> B 23 Q 3/00 <br> B 23 B 29/00 |

Le présent rapport de recherche a été établi pour toutes les revendications

| Lieu de la recherche <br> LA HAYE | Date d'achèvement de la recherche <br> 10-04-1986 | Examinateur <br> BOGAERT F.L. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82